# EUROPÄISCHE PATENTSCHRIFT

(11) **EP 0 513 674 B1**
(45) Veröffentlichungstag und Bekanntmachung des Hinweises auf die Patenterteilung: **09.08.1995**
(21) Anmeldenummer: 92107752.5
(22) Anmeldetag: 08.05.1992
(51) Int. Cl.: F16H 47/04, F16H 57/02

(54) **Hydrostatisch-mechanisches Leistungssverzweigungsgetriebe**
Hydrostatic-mechanical power-split transmission
Transmission hydrostatique-mécanique à division de puissance

(30) Priorität: 14.05.1991 DE 4115624
(43) Veröffentlichungstag der Anmeldung: 19.11.1992
(73) Patentinhaber: DEERE & COMPANY, Moline, Illinois 61265 (US)
(72) Erfinder: Eckhardt, Uli, W-6720 Speyer (DE); Esau, Anja, W-7501 Söllingen (DE)
(74) Vertreter: Feldmann, Bernhard

(56) Entgegenhaltungen:
- EP-A- 0 292 867
- EP-A- 0 302 188
- CH-A- 452 288
- FR-A- 2 024 117
- US-A- 4 378 163
- US-A- 4 854 184
- ANTRIEBSTECHNIK. Bd. 21, Nr. 5, Mai 1982, MAINZ DE Seiten 239 - 242; J.THEISSEN: 'Gestaltung der Planetenradgleitlager schnellaufender Zahnräder-Umlaufgetriebe'
- MARINE GEARING by J.F. SHANNON London 1977, S. 96 bis 102

## Beschreibung

Die Erfindung betrifft ein hydrostatisch-mechanisches Leistungsverzweigungsgetriebe, insbesondere Fahrzeuggetriebe für landwirtschaftliche oder Nutzfahrzeuge, gemäß dem Oberbegriff des Patentanspruchs 1.

Bei Getrieben, wie sie beispielsweise bei Ackerschleppern verwendet werden, erfolgt die Drehmomentübertragung häufig über sehr lange Wellen, auf denen Zahnräder unterschiedlicher Schaltstufen und dergleichen gelagert sind. Diese Wellen sind für die Übertragung großer Dreh- und Biegemomente ausgelegt. Eine unerwünschte Durchbiegung aufgrund von Schwingungen oder der über die Zahnräder radial eingeleiteten Kräfte und Biegemomente kann durch entsprechend große Wellendurchmesser oder durch Mehrfachlagerung vermieden werden.

Die Biegebelastung einer Welle, die lediglich im Bereich ihrer Enden gelagert ist, nimmt ausgehend von den Lagern zur Mitte und insbesondere zu Bereichen radialer Krafteinleitung hin zu. Diese Belastung kann durch entsprechende Auslegung der Wellendicke, die ausgehend von den Lagern zur Mitte hin zunimmt, aufgenommen werden. Dicke Wellen sind jedoch teuer und erhöhen das Getriebegewicht. Ferner beanspruchen sie Bauraum, der daher für andere Getriebeteile nicht genutzt werden kann.

Die Mehrfachlagerung einer Welle ist statisch unbestimmt. Sie erfordert eine sehr genaue Ausrichtung der Lageraufnahmen zueinander, damit durch die Lagerung keine zusätzlichen Kräfte auf die Welle ausgeübt werden, was zu einer erhöhten Lagerbelastung führen würde. Daher müssen sehr hohe Anforderungen an die Fertigungsgenauigkeit der Lageraufnahmen gestellt werden, die sich insbesondere dann nur schwer einhalten lassen, wenn die Lageraufnahmen sich in unterschiedlichen Getriebegehäusen befinden und nicht gemeinsam bearbeitet werden können.

Das Anwendungsgebiet der vorliegenden Erfindung sind hydrostatisch-mechanische Leistungsverzweigungsgetriebe mit stufenlos veränderlichem Übersetzungsverhältnis für Kraftfahrzeuge, insbesondere für landwirtschaftliche oder Nutzfahrzeuge. Derartige Getriebe bestehen aus einem stufenlos zwischen zwei Extremstellungen verstellbaren hydrostatischen Getriebe mit einer volumenverstellbaren sowie einer volumenkonstanten Verdrängermaschine und einem Summierungsgetriebe, bei dem es sich um wenigstens zwei Planetengetriebe handeln kann. Durch mehrere Schaltkupplungen sind Zahnräder-Schaltstufen einstellbar, indem die Ausgangswellen des Summierungsgetriebes über Zahnräder mit unterschiedlichen Übersetzungsverhältnissen mit einer Getriebeausgangswelle verbunden werden.

Fahrzeuggetriebe dienen dazu, die Drehmoment-Drehzahlkennlinie des Antriebsmotors der gewünschten Fahrgeschwindigkeit anzupassen. Dabei verändert das Getriebe sowohl das Drehmoment als auch die Drehzahl. Stufenlose Getriebe haben gegenüber mechanischen Schaltgetrieben den Vorteil, daß in jedem Fahrzustand mit optimaler Motordrehzahl gefahren werden kann. Bei ihnen tritt keine Zugkraftunterbrechung beim Schalten auf, was zum Fahrkomfort beiträgt. Derartige Getriebe können vorteilhaft bei landwirtschaftlichen oder Nutzfahrzeugen, wie beispielsweise bei Ackerschleppern, eingesetzt werden, bei denen neben dem Fahrantrieb wenigstens ein weiterer durch den Antriebsmotor angetriebener Abnehmer, beispielsweise eine Zapfwelle, vorgesehen ist, dessen Drehzahl unabhängig von der Fahrgeschwindigkeit einstellbar sein soll.

Als stufenlose Getriebe eignen sich insbesondere Leistungsverzweigungsgetriebe der genannten Art, wie sie beispielsweise durch die EP-A-0 302 188 und die DE-A-35 12 523 und dem dort genannten Stand der Technik bekannt geworden sind. Bei diesen Getrieben verzweigt sich die von der Antriebsmaschine abgegebene Leistung zum einen direkt zu einer ersten Eingangswelle eines Summierungsgetriebes und zum anderen zu einem Hydraulikgetriebe. Das Hydraulikgetriebe enthält eine Konstanteinheit mit konstantem Fördervolumen und eine Verstelleinheit mit verstellbarem Fördervolumen. Durch Verstellen der Verstelleinheit läßt sich die Ausgangsdrehzahl des Hydraulikgetriebes innerhalb eines Bereiches, der von negativen Drehzahlen bis zu positiven Drehzahlen reichen kann, einstellen. Die Ausgangswelle des Hydraulikgetriebes steht mit einer zweiten Eingangswelle des Summierungsgetriebes, die als An- oder Abtriebswelle wirkt, in Verbindung. Durch das Summierungsgetriebe werden die Drehzahlen und Drehmomente von der Antriebsmaschine und dem Hydraulikgetriebe zusammengeführt.

Das bekannte Summierungsgetriebe enthält ein Doppelplanetengetriebe, dessen beide Sonnenräder auf der genannten zweiten Eingangswelle, die an den hydraulischen Zweig angeschlossen ist, angeordnet sind. Die Eingangswelle des mechanischen Zweiges steht sowohl mit einem der Planetenträger als auch einem der Hohlräder in Verbindung. Das Summierungsgetriebe weist zwei Ausgangswellen auf, die jeweils mit zwei durch Schaltkupplungen einrückbaren mechanischen Schaltstufen verbunden sind. Die beiden Ausgangswellen verhalten sich unterschiedlich bei Verstellen der Verstelleinheit. Während beim Höherstellen der Verstelleinheit die Drehzahl der ersten Ausgangswelle zunimmt, nimmt die Drehzahl der zweiten Ausgangswelle beim Runterstellen der Verstelleinheit zu. So erreicht man die für die Lastübergabe notwendigen Synchronbedingungen an den jeweiligen Gangbereichsgrenzen, und es ist beim Hin- und Herschwenken der Verstelleinheit und einem Umschalten der Schaltstufen eine weitgehende kontinuierliche Drehzahlerhöhung bzw. -verminderung an der Ausgangswelle des Leistungsverzweigungsgetriebes über den gesamten Fahrbereich möglich.

Um einen großen Fahrbereich zu überdecken, sollte das Gesamtstellverhältnis möglichst groß gewählt werden. Das Stellverhältnis ist bei gegebener Getriebeeingangsdrehzahl das Verhältnis von maximaler zu minimaler Ausgangsdrehzahl, die durch Verstellen der Verstelleinheit einstellbar sind. Die kleinste Enddrehzahl des Leistungsverzweigungsgetriebes multipliziert mit dem Gesamtstellverhältnis ergibt die maximale Abtriebsdrehzahl. Dies entspricht dem insgesamt stufenlos unter Last verstellbaren Bereich. Das Gesamtstellverhältnis ist gleich dem Produkt aus den einzelnen Stellverhältnissen der Gangbereiche.

Mit steigendem Einzelstellverhältnis steigt jedoch der maximal erforderliche hydraulische Leistungsanteil wesentlich an. Das Verhältnis von maximaler hydraulischer Antriebsleistung zur Getriebegesamtleistung ist gleich dem Einzelstellverhältnis minus eins geteilt durch zwei. Da die hydrostatische Leistungsübertragung einen erheblich schlechteren Wirkungsgrad als eine Übertragung nur mittels Zahnrädern aufweist, sollte das Einzelstellverhältnis möglichst klein gewählt werden.

Wegen der Verwendung des Summierungsgetriebes beansprucht das Leistungsverzweigungsgetriebe der oben genannten Art gewöhnlich einen größeren radialen Bauraum als ein mechanisches Schaltgetriebe mit gleicher Leistung. Aus diesem Grund läßt sich bei einem gegebenen Fahrzeug ein mechanisches Schaltgetriebe nicht ohne weiteres gegen ein Leistungsverzweigungsgetriebe austauschen, was bei der angestrebten Vielfalt der Fahrzeugtypen wünschenswert wäre.

Aus dem Fachbuch "Marine Gearing", by J.F. Shannon, London 1977, S. 96 bis 102 ist ein Schiffsgetriebe mit einer Eingangswelle, zwei parallel nebeneinander angeordneten Gegenwellen und einer Ausgangswelle bekannt, wobei alle Wellen außer der Eingangswelle aus zwei miteinander fluchtenden, axial zueinander beabstandeten Teilwellen bestehen, die durch Torsionswellen formschlüssig miteinander verbunden sind, wodurch Zahnradschäden bei Volldampf-Umschaltung von Vorwärts auf Rückwärts während einer Notfall-Vollbremsung vermieden werden sollen.

Die mit der Erfindung zu lösende Aufgabe wird darin gesehen, ein hydrostatisch-mechanisches Leistungsverzweigungsgetriebe der eingangs genannten Art anzugeben, bei dem ein möglichst geringer Abstand zwischen Getriebeeingangswelle und Getriebeausgangswelle eingehalten werden kann, welches die Verwendung vergleichsweise kleiner Wellendurchmesser ermöglicht und kostengünstig und kompakt herstellbar ist.

Die Aufgabe wird erfindungsgemäß durch die kennzeichnenden Merkmale des Patentanspruchs 1 gelöst.

Dabei besteht die Getriebeausgangswelle aus zwei Teilwellen, die je wenigstens eine Schaltstufe aufnehmen. Die Teilwellen fluchten miteinander und sind durch eine Torsionswelle formschlüssig miteinander verbunden. Die Torsionswelle, die vorzugsweise einen geringeren Durchmesser wie die Teilwellen aufweist, befindet sich dabei axial auf der Höhe des Summierungsgetriebes, so daß für das Summierungsgetriebe ein größerer radialer Bauraum zur Verfügung steht, als es bei bisherigen Getrieben der Fall ist.

Eine besonders bevorzugte Ausgestaltung des Leistungsverzweigungsgetriebes sieht vor, daß für wenigstens zwei Schaltstufen unterschiedliche Einzelstellverhältnisse gegeben sind. Hierdurch kann weiterer radialer Bauraum eingespart werden, so daß Forderungen nach einem geringen Abstand zwischen Getriebeeingangswelle und Getriebeausgangswelle eingehalten werden können.

Unterschiedliche Einzelstellverhältnisse können zwar zu einer Verschlechterung des Gesamtwirkungsgrades führen, das Fallenlassen der Forderung nach gleichen Einzelstellverhältnissen gibt dem Konstrukteur jedoch mehr Spielraum für die Ausgestaltung des Summierungsgetriebes. Es hat sich gezeigt, daß bei den bekannten Leistungsverzweigungsgetrieben mit gleich großen Einzelstellverhältnissen das Summierungsgetriebe aus zwei unterschiedlichen Planetengetrieben bestehen muß, die insbesondere unterschiedliche Außendurchmesser aufweisen. Dabei weist eines der Hohlräder einen größeren Durchmesser auf als das andere. Das Hohlrad mit dem größeren Außendurchmesser bestimmt den radialen Bauraum des Planetengetriebes. Bei der erfindungsgemäßen Lösung können hingegen die Außendurchmesser der Hohlräder aneinander angeglichen werden.

Vorzugsweise werden beide Planetengetriebestufen identisch ausgebildet. Dies ermöglicht die Verwendung von Zahnrädern mit identischer Verzahnungsgeometrie, wodurch die Anzahl unterschiedlicher Bauteile verringert werden und radialer Bauraum eingespart werden kann, da beide Hohlräder einen gleichen Außendurchmesser haben können. Hierbei können beide Hohlraddurchmesser so bemessen sein wie das kleinere Hohlrad gemäß eines bekannten Leistungsverzweigungsgetriebes.

Je kleiner das Stellverhältnis ist, desto niedriger sind die hydrostatischen Verluste und desto größer ist der Gesamtwirkungsgrad des Getriebes. Um ein möglichst wirtschaftliches Getriebe zu erhalten, wird dieses vorzugsweise derart ausgelegt, daß für Schaltstufen des Hauptarbeitsbereichs ein kleineres Stellverhältnis gegeben ist als in anderen Schaltstufen, d. h. im Hauptarbeitsbereich, beispielsweise für die Feldarbeit eines Ackerschleppers, wird mit einer Schaltstufe gefahren, deren Stellverhältnis kleiner ist als in einer anderen Schaltstufe. Damit weist das Getriebe im Hauptarbeitsbereich einen vergleichsweise großen Wirkungsgrad auf.

Eine kostengünstige und raumsparende Ausgestaltung der Erfindung sieht vor, daß die Sonnenräder der beiden Planetengetriebestufen als durchgehende Verzahnung auf einer Welle ausgeführt sind.

Es ist zweckmäßig, bei Planetengetrieben eine Welle radial beweglich zu lagern, damit alle Verzahnungen des Getriebes gleichmäßig belastet werden und keine statische Überbestimmung auftritt. Vorzugsweise werden die Sonnenräder radial nachgiebig gelagert und stützen sich an allen der wenigstens zwei Planetenräder ab.

Die Torsionswelle wird ohne Achsversatz zwischen den beiden Teilwellen angeordnet. Die formschlüssige Verbindung kann beispielsweise als Zahnkupplung ausgebildet sein.

Die Torsionswelle ist eine Welle, die lediglich ein reines Torsionsmoment überträgt, jedoch keine Biegemomente aufnimmt. Dadurch kann die Torsionswelle wesentlich dünner ausgelegt werden als eine vergleichbare durchgehende Welle. Wegen ihrer reinen Torsionsbelastung kann sie in vorteilhafter Weise einen wesentlich geringeren Durchmesser als die beiden Teilwellen aufweisen. Vorzugsweise ist ihr Durchmesser nur etwa halb so dick wie der Durchmesser der Teilwellen.

Durch die erfindungsgemäße Lösung können die Teilwellen kurz und kompakt ausgelegt werden. Diese lassen sich wesentlich billiger und genauer fertigen als lange Wellen, die beim Drehen ausbiegen und sich beim Härten verziehen können. Die Lager der Teilwellen können kleiner dimensioniert werden, da sie geringere Kräfte aufnehmen. Es ist auch möglich, die beiden Teilwellen und die zugehörigen Lager entsprechend ihrer tatsächlichen Belastung und der Häufigkeit ihres Einsatzes in bezug auf ihre Festigkeit unterschiedlich zu dimensionieren. Eine vergleichbare bisherige Welle muß hingegen insgesamt auf die höchste zu erwartende Belastung ausgelegt werden. Ferner ist eine einfache Montage des Getriebes möglich. Die geteilte Ausbildung der Welle erlaubt die Anwendung eines geteilten Getriebegehäuses, bei dem zur Montage die beiden Getriebehälften lediglich ineinander gesteckt werden müssen.

Eine einfache Ausgestaltung der Erfindung sieht vor, daß die Teilwellen je eine stirnseitige Ausnehmung aufweisen, die jeweils ein Ende der Torsionswelle aufnehmen. Durch eine Verzahnung ist die Torsionswelle formschlüssig mit der Teilwelle verbunden. Die Torsionswelle braucht zur Montage lediglich in die Ausnehmungen der Teilwellen eingesteckt zu werden.

Um eine Zentrierung der Torsionswelle in den Teilwellen zu gewährleisten, ist es vorteilhaft, die Verzahnungen an den Enden der Torsionswellen als Evolventenverzahnung mit radial ausgerichteten Zähnen auszubilden, die eine axiale Verschiebung der Torsionswelle innerhalb eines vorgebbaren Spiels zuläßt. Das axiale Spiel ist vorzugsweise 2 mm oder größer. Durch das Spiel zwischen den Teilwellen und der Torsionswelle wird eine biegemomentenfreie Kraftübertragung gewährleistet. Wegen der einachsigen Belastung kann die Konstruktion mit einem wesentlich geringeren Außendurchmesser konzipiert werden.

Es ist von Vorteil, die Verzahnungen auf die Torsionswelle aufzurollen. Durch dieses kaltverformende Verfahren wird das Material verdichtet und nicht spanabhebend abgetragen, was zu einer Erhöhung der Festigkeit der Verzahnung führt.

Vorzugsweise wird die Torsionswelle in einem Wellenabschnitt eingesetzt, der radial durch andere Getriebebauteile beengt ist. Hierdurch ist eine kompakte Getriebebauweise insbesondere hinsichtlich der radialen Erstreckung möglich, da, wie bereits ausgeführt wurde, die Torsionswelle vergleichsweise dünn ausgebildet sein kann und wenig radialen Bauraum beansprucht, der daher für andere Bauteile zur Verfügung steht.

Eine besonders vorteilhafte Anordnung, bei der ein relativ geringer Abstand zwischen den beiden Getriebewellen eingehalten werden kann, ergibt sich dann, wenn die Torsionswelle in einem axialen Bereich der ersten Getriebewelle angeordnet ist, der durch auf der zweiten Getriebewelle gelagerte Getriebeteile radial beengt ist.

Zur Weiterleitung von Schmier- oder Kühlmitteln zwischen den Teilwellen ist es zweckmäßig, in der Torsionswelle eine axiale Bohrung vorzusehen. Eine Abdichtung des Durchflußkanales im Bereich der Übergänge zwischen Torsionswelle und Teilwelle ist bei einer Evolventenverzahnung nicht erforderlich, da diese eine ausreichende Abdichtung gewährleistet.

Weitere vorteilhafte Ausgestaltungen und Weiterbildungen der Erfindung gehen aus den Unteransprüchen hervor.

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Es zeigt:
- Fig. 1: die schematische Darstellung eines erfindungsgemäßen Getriebes,
- Fig. 2: eine vereinfachte Darstellung der Abhängigkeit der Getriebeausgangsdrehzahl von dem Schwenkwinkel der Verstelleinheit und den Gangstufen und
- Fig. 3: die Schnittdarstellung eines Teilbereiches des in Fig. 1 dargestellten Getriebes.

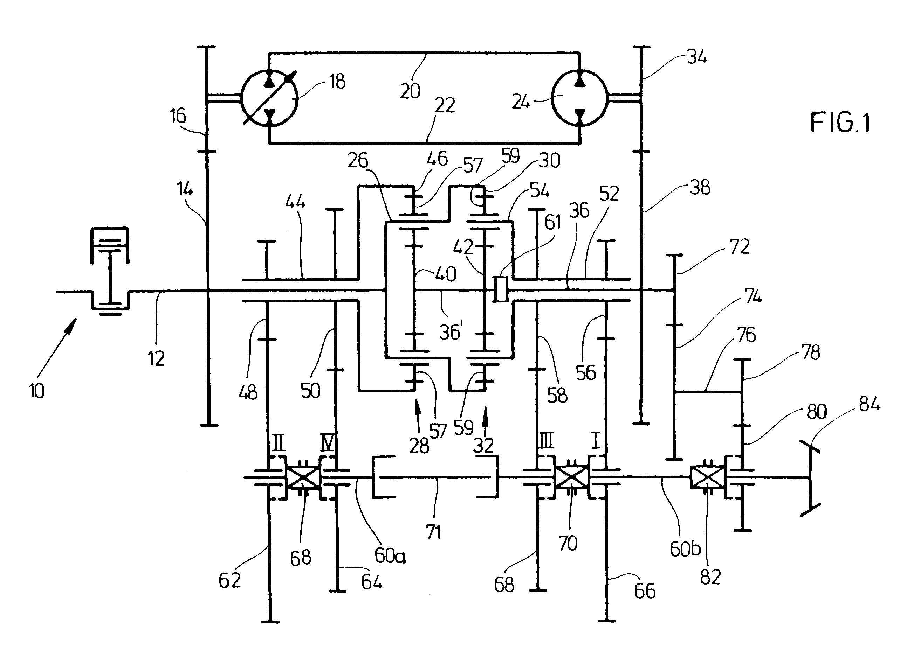

Das in Fig. 1 dargestellte hydrostatisch-mechanische Leistungsverzweigungsgetriebe ist insbesondere für Ackerschlepper bestimmt. Bei ihm gibt eine Verbrennungsmaschine 10 ihr Drehmoment an eine Getriebeeingangswelle 12 ab. Diese treibt ein Zahnrad 14 an, welches mit dem Eingangszahnrad 16 einer hydraulischen, im Volumen verstellbaren Verdrängermaschine (Verstelleinheit) 18 kämmt. Die Verstelleinheit 18 ist hydraulisch über Hydraulikleitungen 20, 22 mit einer hydraulischen, ein konstantes Volumen verdrängenden Verdrängermaschine (Konstanteinheit) 24 verbunden. Die Verstelleinheit 18 läßt sich zwischen einem maximalen negativen Ausschlag und einem maximalen positiven Ausschlag verstellen. Bei einem negativen Ausschlag entspricht die Verstelleinheit 18 einem hydrostatischen Motor und die Konstanteinheit 24 einer Pumpe. Bei einem positiven Ausschlag arbeitet die Verstelleinheit 18 als Pumpe und die Konstanteinheit 24 als Motor.

Die Getriebeeingangswelle 12 treibt neben dem Zahnrad 14 den Planetenträger 26 eines ersten Planetengetriebes 28 und das Hohlrad 30 eines zweiten Planetengetriebes 32 an. Die Leistung der Verbrennungsmaschine 10 wird somit verzweigt und einerseits dem hydrostatischen Teil und andererseits dem mechanischen Doppelplanetengetriebe zugeführt.

Die Konstanteinheit 24 enthält ein Zahnrad 34, das mit einem auf der Sonnenradwelle 36 des Doppelplanetengetriebes befestigten Zahnrad 38 kämmt. Die Sonnenradwelle 36 ist geteilt ausgeführt und trägt in ihrem mittleren Bereich eine Steckverzahnung 61, durch die der Wellenteil 36' mit dem Hauptwellenteil 36 drehfest verbunden ist. Im folgenden wird in der Regel für die gesamte zweigeteilte Sonnenradwelle 36, 36' das Bezugszeichen 36 verwendet.

Die Sonnenradwelle trägt die beiden Sonnenräder 40, 42 des ersten und zweiten Planetengetriebes 28, 32. Die beiden Sonnenräder 40, 42 sind als einheitlich durchgehende Verzahnung auf der Sonnenradwelle 36 ausgebildet. Sie weisen daher auch eine gleiche Zähnezahl auf. Diese Ausgestaltung erlaubt es, die Sonnenraddurchmesser und die axiale Ausdehnung der Sonnenräder 40, 42 klein zu halten.

Ein Abschnitt der Getriebeeingangswelle 12 verläuft innerhalb einer ersten Hohlwelle 44, die mit dem Hohlrad 46 des ersten Planetengetriebes 28 verbunden ist. Ferner trägt die erste Hohlwelle 44 drehfest zwei Zahnräder 48, 50. Ein Abschnitt der Sonnenradwelle 36 verläuft innerhalb einer zweiten Hohlwelle 52, die mit dem Planetenträger 54 des zweiten Planetengetriebes 32 verbunden ist. Auch die zweite Hohlwelle 52 trägt drehfest zwei Zahnräder 56, 58.

Zwischen den Sonnenrädern 40, 42 und den Hohlrädern 30, 46 der beiden Planetengetriebe 28, 32 sind jeweils drei auf dem Umfang gleichmäßig verteilte Planetenräder 57, 59 angeordnet. Diese werden von den Planetenträgern 26, 54 getragen. Die Sonnenwelle 36 ist geteilt ausgeführt und weist in ihrem mittleren Bereich eine als Evolventenverzahnung ausgebildete Steckverzahnung 61 auf, die ein radiales Verschwenken des die Sonnenräder 40, 42 tragenden Wellenteils 36' zuläßt und eine Drehmomentübertragung gewahrleistet. Im übrigen ist der Wellenteil 36' in radialer Richtung nicht durch Lager festgelegt, sondern wird lediglich durch die ihn umgebenden Planetenräder 57, 59 gestützt.

Die Zahnräder 48, 50, 56, 58 kämmen mit Zahnrädern 62, 64, 66, 68, die auf einer in zwei Teilwellen 60a, 60b unterteilten Getriebeausgangswelle drehbar gelagert sind und durch eine erste und eine zweite zweiseitig wirkende Schaltmuffe 68, 70 wahlweise mit der Getriebeausgangswelle 60a, 60b in Eingriff gebracht werden können, um eine erste, zweite, dritte oder vierte Schaltstufe zu realisieren. Die Schaltstufen sind mit den römischen Ziffern I, II, III und IV gekennzeichnet.

Die beiden Teilwellen 60a, 60b der Getriebeausgangswelle sind durch eine Torsionswelle 71 formschlüssig verbunden und drehen sich mit gleicher Winkelgeschwindigkeit um.

Die Sonnenradwelle 36 trägt ferner ein Kriechgangzahnrad 72, das mit einem ersten Zahnrad 74 einer Zwischenwelle 76 kämmt. Ein zweites Zahnrad 78 der Zwischenwelle 76 kämmt mit einem fünften auf der Ausgangswelle 60b drehbar gelagerten Zahnrad 80, welches durch eine dritte einseitige Schaltmuffe 82 mit der Getriebeausgangswelle 60b kuppelbar ist.

Ein freies Ende der Getriebeausgangswelle 60b trägt ein Antriebsritzel 84, das mit einem nicht dargestellten Tellerrad eines Differentialgetriebes zusammenwirken kann. Anstelle des durch das Antriebsritzel 84 angetriebenen Differentialgetriebes kann sich an die Getriebeausgangswelle 60b auch ein nicht dargestelltes Gruppengetriebe zur Umschaltung zwischen hohen und langsamen Fahrgeschwindigkeitsgruppen anschließen.

Die Zähnezahl der Zahnräder des beschriebenen Getriebes geht aus der nachstehenden Tabelle hervor. Es ist hervorzuheben, daß die sich entsprechenden Zahnräder der beiden Planetengetriebe 28, 32 gleich viele Zähne und gleiche Verzahnungsgeometrien aufweisen. Damit sind auch die Außendurchmesser der beiden Planetengetriebe 28, 32 gleich groß.

**Tabelle**

| Zahnradbezeichnung | Bezugszeichen | Zähnezahl |
|---|---|---|
| Zahnrad der Getriebeeingangswelle | 14 | 49 |
| Eingangszahnrad der Verstelleinheit | 16 | 25 |
| Hohlrad des zweiten Planetengetriebes | 30 | 52 |
| Zahnrad der Konstanteinheit | 34 | 25 |
| Zahnrad der Sonnenradwelle | 38 | 47 |
| Sonnenrad des ersten Planetengetriebes | 40 | 14 |
| Sonnenrad des zweiten Planetengetriebes | 42 | 14 |
| Hohlrad des ersten Planetengetriebes | 46 | 52 |
| erstes Zahnrad der ersten Hohlwelle | 48 | 24 |
| zweites Zahnrad der ersten Hohlwelle | 50 | 40 |
| erstes Zahnrad der zweiten Hohlwelle | 56 | 24 |
| Planetenräder | 57 | 19 |
| zweites Zahnrad der zweiten Hohlwelle | 58 | 40 |
| Planetenräder | 59 | 19 |
| erstes Zahnrad der Ausgangswelle | 62 | 42 |
| zweites Zahnrad der Ausgangswelle | 64 | 26 |
| drittes Zahnrad der Ausgangswelle | 66 | 42 |
| viertes Zahnrad der Ausgangswelle | 68 | 26 |
| Kriechgangzahnrad | 72 | 23 |
| erstes Zahnrad der Zwischenwelle | 74 | 37 |
| zweites Zahnrad der Zwischenwelle | 78 | 21 |
| fünftes Zahnrad der Ausgangswelle | 80 | 40 |

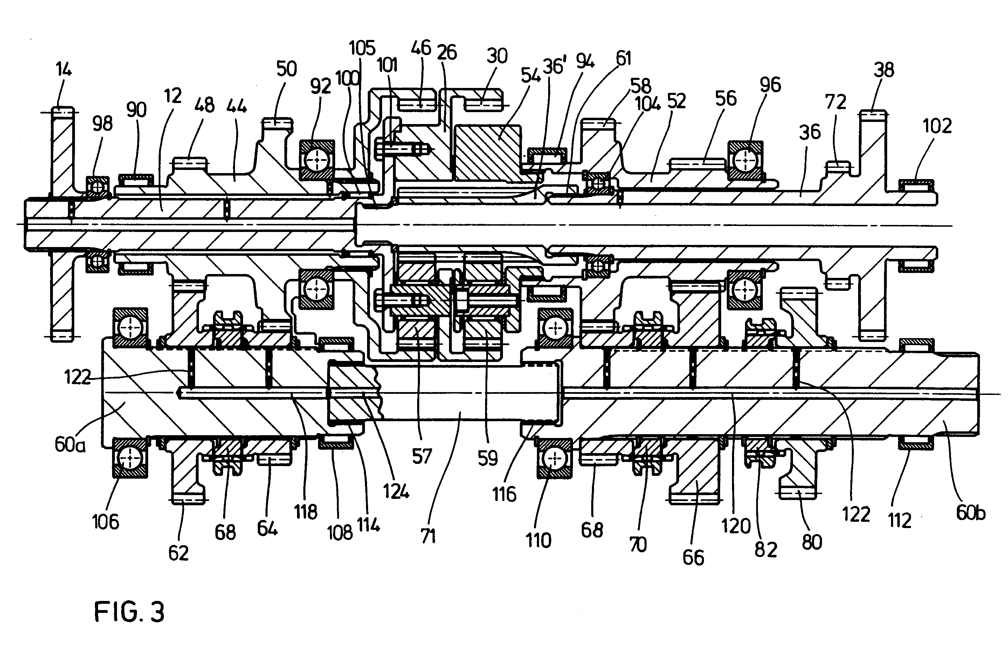

Da es sich bei der Fig. 1 lediglich um eine schematische Darstellung des Getriebes handelt, sind die Durchmesserverhältnisse hier nicht maßstabsgetreu wiedergegeben. Insbesondere ist nicht erkennbar, daß der mittlere Bereich der Getriebeausgangswelle, in dem die Torsionswelle 71 liegt, in radialer Hinsicht räumlich sehr eng benachbart zu den Hohlrädern 30 und 46 der beiden Planetengetriebe 28, 32 liegt und somit den minimalen Abstand zwischen der Getriebeeingangswelle 12 und der Getriebeausgangswelle 60a, 60b festlegt. Diese räumliche Enge geht jedoch aus Fig. 3 hervor, in der ein Teilbereich des Getriebes in einer etwas vereinfachten Schnittdarstellung dargestellt ist. Dabei wurden für sich entsprechende Bauteile die gleichen Bezugszeichen wie in Fig. 1 verwendet.

Gemäß Fig. 3 stützt sich die erste Hohlwelle 44 über die Lager 90, 92 und die zweite Hohlwelle 52 über die Lager 94, 96 an dem nicht dargestellten Getriebegehäuse ab. Mit der ersten Hohlwelle 44 ist über eine Verzahnung das Hohlrad 46 des ersten Planetengetriebes 28 und mit der zweiten Hohlwelle ist über eine Verzahnung der Planetenträger 54 des zweiten Planetengetriebes 32 drehfest verbunden. Die Getriebeeingangswelle 12 ist durch ein Lager 98 im Getriebegehäuse und durch ein Lager 100 in der ersten Hohlwelle 44 gelagert. An ihr ist über eine Verschraubung 101 der Planetenradträger 26 mit dem Hohlrad 30 befestigt. Die Sonnenradwelle 36 ist über ein Lager 102 im Getriebegehäuse und über ein weiteres Lager 104 in der zweiten Hohlwelle 52 gelagert. Die Sonnenradwelle 36 trägt über eine als Evolventenverzahnung ausgebildete Steckverzahnung 61 eine Teilwelle 36', in die die Verzahnungen der beiden Sonnenräder 40, 42 eingefräst sind.

An ihrem planetengetriebeseitigen Ende trägt die Getriebeeingangswelle 12 eine Innenverzahnung 105, die dem Antrieb einer nicht dargestellten Zapfwelle dient. Die Zapfwelle erstreckt sich durch die Sonnenradwelle 36, 36', die als Hohlwelle ausgelegt ist.

Die Teilwellen 60a, 60b sind je über zwei Lager 106, 108, 110, 112 im Getriebegehäuse gelagert. Sie tragen die drehfesten Schaltmuffen 68, 70, 82 und die als Losräder ausgebildeten Zahnräder 62, 64, 68, 66, 80, die über die Schaltmuffen 68, 70, 82 mit den Teilwellen 60a, 60b drehfest verbindbar sind.

Die beiden Teilwellen 60a, 60b fluchten miteinander. An ihren einander zugewandten Stirnseiten sind Ausnehmungen mit Radialverzahnungen 114, 116 eingelassen. Die Ausnehmungen nehmen das jeweilige Ende einer Torsionswelle 71 auf, die mit korrespondierenden Verzahnungen versehen sind. Bei den Verzahnungen handelt es sich um Evolventenverzahnungen. Die Verzahnungen der Torsionswelle 71 sind aufgerollt. Die Torsionswelle 71 ist innerhalb eines axialen Spiels relativ zu den Teilwellen 60a, 60b verschiebbar. Das Spiel beträgt ca. 2 mm. Die Torsionswelle 71 ist etwa halb so dick wie die Teilwellen 60a, 60b. Sie befindet sich in einem Wellenabschnitt, der radial durch die Hohlräder 30, 46 der Planetengetriebe beengt ist. Bei Verwendung einer durchgehenden Getriebeausgangswelle, deren Durchmesser wenigstens dem der Teilwellen 60a, 60b entsprechen müßte, wäre der geringe Achsabstand gemäß Fig. 3 zwischen der Getriebeingangswelle 12 und der Getriebeausgangswelle 60 nicht einzuhalten.

Zur Schmierung der Zahnräder 62, 64, 66, 68, 80 sind in den Teilwellen 60a, 60b axiale Bohrungen 118, 120 und radiale Bohrungen 122 vorgesehen. Die axialen Bohrungen 118, 120 der Teilwellen werden durch eine axiale Bohrung 124 in der Torsionswelle 71 miteinander verbunden.

Die automatische Steuerung und Regelung der Verstellung der Verstelleinheit 18 und der Schaltung der Schaltmuffen 68, 70, 82 kann wie bei bekannten Leistungsverzweigungsgetrieben dieser Art (EP-A-0 302 188) erfolgen.

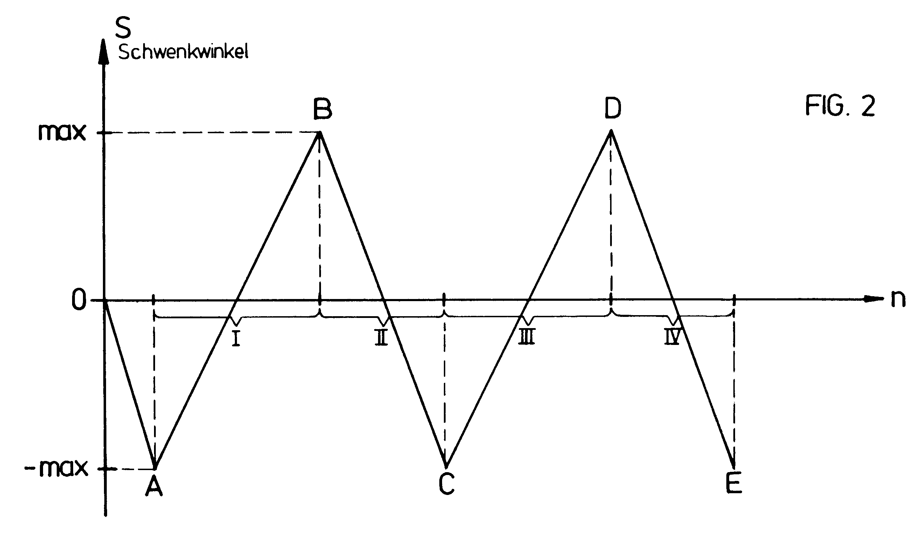

Die Funktionsweise des erfindungsgemäßen Leistungsverzweigungsgetriebes ist folgende:
Das Anfahren des Fahrzeuges erfolgt rein hydrostatisch, indem die erste bis vierte Schaltstufe ausgeschaltet sind und durch die dritte Schaltmuffe 82 das fünfte Zahnrad 80 mit der Getriebeausgangswelle 60b in Eingriff gebracht wird. Hierbei verläuft der Kraftfluß von der Verbrennungsmaschine 10 über die Getriebeeingangswelle 12, die Zahnräder 14, 16, die Verstelleinheit 18, die Konstanteinheit 24, die Zahnräder 34, 38, die Sonnenradwelle 36, die Zahnräder 72, 74, die Zwischenwelle 76, die Zahnräder 78, 80 und die dritte Schaltmuffe 82 zur Getriebeausgangswelle 60b. Die Verstellung der Verstelleinheit 18 erfolgt ausgehend von ihrer Nullage 0, in der keine Förderung von Hydraulikflüssigkeit erfolgt, bis zu einem maximalen negativen Schwenkwinkel S. Hierbei steigt die Abtriebsdrehzahl n der Getriebeausgangswelle 60b stetig an, bis der erste Koppelpunkt A erreicht ist. Die Zusammenhänge zwischen Drehzahl n und Schwenkwinkel S sind in Fig. 2 in vereinfachter Weise dargestellt.

Mit Erreichen des ersten Koppelpunktes A wird die erste Schaltstufe I eingeschaltet, indem die zweite Schaltmuffe 70 das Zahnrad 66 mit der Getriebeausgangswelle 60b verbindet. Anschließend wird die dritte Schaltmuffe 82 automatisch ausgerückt. Die Verstellung der Verstelleinheit 18 nimmt nun stetig bis zu einem maximalen positiven Schwenkwinkel S zu. Hierbei ist das zweite Planetengetriebe 32 aktiv, dessen Hohlrad 30 mit der Motordrehzahl angetrieben wird.

Zunächst (bis zum Erreichen der Nullage 0 des Schwenkwinkels S) arbeitet die Verstelleinheit 18 als hydrostatischer Motor und die Konstanteinheit als Pumpe, die von der Sonnenradwelle 36 angetrieben wird. Beim ersten Koppelpunkt A läuft die Sonnenradwelle 36 mit ungefähr negativer Motordrehzahl um, bei der sich eine minimale Antriebsdrehzahl an der zweiten Hohlwelle 52 ergibt. Wird der Schwenkwinkel S bis auf seine Nullage 0 verringert, sinkt auch die Drehzahl der Sonnenradwelle 36 bis zum Stillstand. Gleichzeitig steigt die Antriebsdrehzahl an der zweiten Hohlwelle 52 und damit auch an der Getriebeausgangswelle 60b stetig an. Nach Durchfahren der Nullage 0 wird die Verstelleinheit 18 zur Pumpe, die von der Getriebeeingangswelle 12 angetrieben wird, und die Konstanteinheit 24 zum Motor, der Leistung an die Sonnenradwelle 36 abgibt. Beim Durchfahren des Verstellbereiches bis zum maximalen positiven Ausschlag steigt die Drehzahl der zweiten Hohlwelle 52 weiter kontinuierlich an. An diesem Anschlag, dem zweiten Koppelpunkt B, laufen alle Wellen der beiden Planetengetriebe 28, 32 mit der Motordrehzahl um.

Mit Erreichen des zweiten Koppelpunktes B wird die zweite Schaltstufe II eingeschaltet, indem die erste Schaltmuffe 68 das Zahnrad 62 mit der Getriebeausgangswelle 60a verbindet. Hierauf wird die zweite Schaltmuffe 70 automatisch ausgerückt. Die Verstellung der Verstelleinheit 18 nimmt nun stetig bis zu einem maximalen negativen Schwenkwinkel S ab. Hierbei ist das erste Planetengetriebe 28 aktiv. Sein Planetenträger 26 wird mit der Motordrehzahl angetrieben. Die Sonnenradwelle 36 und die erste Hohlwelle 44 laufen zunächst ebenfalls mit der Motordrehzahl um. Mit Verringerung des Schwenkwinkels S nimmt die Drehzahl der Sonnenradwelle 36 ab und erreicht beim dritten Koppelpunkt C ihren maximalen negativen Wert. Entsprechend erhöht sich stetig die Drehzahl der zweiten Hohlwelle 44 und damit der Getriebeausgangswelle 60a, 60b.

Mit Erreichen des dritten Koppelpunktes C wird die dritte Schaltstufe III eingeschaltet, indem die zweite Schaltmuffe 70 das Zahnrad 68 mit der Getriebeausgangswelle 60b verbindet. Anschließend wird die erste Schaltmuffe 68 ausgerückt. Die Verstelleinheit 18 wird wieder in positiver Richtung verschwenkt, so daß die Drehzahl der Getriebeausgangswelle, wie anhand der ersten Schaltstufe I beschrieben, weiter ansteigt, bis der vierte Koppelpunkt D erreicht ist. Hierbei ist wieder das zweite Planetengetriebe 32 aktiv.

Mit Erreichen des vierten Koppelpunktes D wird die vierte Schaltstufe IV eingeschaltet, indem die erste Schaltmuffe 68 das Zahnrad 64 mit der Getriebeausgangswelle 60a verbindet und die zweite Schaltmuffe 70 ausgerückt wird. Durch Verringern des Schwenkwinkels der Verstelleinheit 18 läßt sich nun die Drehzahl der Getriebeausgangswelle 60a, 60b bis zu ihrem maximalen Wert bei der Schwenkwinkeleinstellung E erhöhen. Wie bei der zweiten Schaltstufe II ist auch in der vierten Schaltstufe IV das erste Planetengetriebe 28 aktiv. Die Funktionsweise des Getriebes ist dabei die gleiche, wie sie anhand der zweiten Schaltstufe II beschrieben wurde.

Soll die Ausgangsdrehzahl vermindert werden, so erfolgen die Einstellung des Schwenkwinkels und der Schaltmuffen 68, 70, 82 in entsprechend umgekehrter Reihenfolge.

Aus Fig. 2 ist ersichtlich, daß der absolute Wert der Steigung der beiden Geraden zwischen den Koppelpunkten A und B sowie zwischen C und D geringer ist als der absolute Wert der Steigung der Geraden zwischen den Koppelpunkten B und C oder D und E. Dies ist auf die unterschiedlichen Stellverhältnisse für den ersten und dritten Gang einerseits und den zweiten und vierten Gang andererseits zurückzuführen. Jeweils zwei Schaltstufen haben ein gemeinsames Stellverhältnis.

## Patentansprüche

1. Hydrostatisch-mechanisches Leistungsverzweigungsgetriebe mit stufenlos veränderlichem Übersetzungsverhältnis bestehend aus
einem stufenlos zwischen zwei Extremstellungen verstellbaren hydrostatischen Getriebe mit einer volumenverstellbaren Verdrängermaschine (18) und einer volumenkonstanten Verdrängermaschine (24),
einem Summierungsgetriebe, welches insbesondere wenigstens zwei Planetengetriebe (28, 32) enthalten kann,
und mehreren durch Schaltkupplungen (68, 70) einrückbaren Zahnräder-Schaltstufen (I, II, III, IV), durch die die Ausgangswellen (44, 52) des Summierungsgetriebes (28, 32) mit einer Getriebeausgangswelle (60a, 60b) verbindbar sind,
dadurch gekennzeichnet, daß die Getriebeausgangswelle aus zwei miteinander fluchtenden, axial zueinander beabstandeten Teilwellen (60a, 60b) besteht, die je wenigstens eine Schaltstufe (I, III; II, IV) aufnehmen und durch eine Torsionswelle (71) formschlüssig miteinander verbunden sind.

2. Getriebe nach Anspruch 1, dadurch gekennzeichnet, daß für wenigstens zwei Schaltstufen (I, III; II, IV) unterschiedliche Einzelstellverhältnisse gegeben sind.

3. Getriebe nach Anspruch 2, dadurch gekennzeichnet, daß das Summierungsgetriebe zwei Planetengetriebe (28, 32) enthält und die Sonnenräder (40, 42), die Hohlräder (30, 46) und die Planetenräder (57, 59) der Planetengetriebe (28, 32) jeweils gleiche Verzahnungen aufweisen.

4. Getriebe nach Anspruch 2 oder 3, dadurch gekennzeichnet, daß in wenigstens einer im Hauptarbeitsbereich des Fahrzeuges angewandten Schaltstufe (II, IV) ein Stellverhältnis gegeben ist, das kleiner ist als das Stellverhältnis in einer anderen Schaltstufe (I, III).

5. Getriebe nach einem der Ansprüche 1 bis 4, dadurch gekennzeichnet, daß die beiden Sonnenräder (40, 42) als durchgehende Verzahnung auf einer einstückigen Welle (36) ausgeführt und in einer Evolventenverzahnung radial nachgiebig gelagert sind und daß sich die Sonnenräder (40, 42) radial an allen der wenigstens zwei Planetenräder (57, 59) abstützen.

6. Getriebe nach einem der Ansprüche 1 bis 5, dadurch gekennzeichnet, daß wenigstens eine Teilwelle (60a, 60b) eine stirnseitige Ausnehmung aufweist, die ein Ende der Torsionswelle (71) aufnimmt, und daß durch eine Verzahnung (114, 116) die Torsionswelle (71) formschlüssig mit der Teilwelle (60a, 60b) verbunden ist.

7. Getriebe nach Anspruch 6, dadurch gekennzeichnet, daß die Verzahnung (114, 116) am Ende der Torsionswelle (71) eine Evolventenverzahnung mit radial ausgerichteten Zähnen ist und daß die Torsionswelle (71) innerhalb eines axialen Spiels relativ zu den Teilwellen (60a, 60b) verschiebbar ist.

8. Getriebe nach einem der Ansprüche 1 bis 7, dadurch gekennzeichnet, daß der Durchmesser der Torsionswelle (71) geringer als der Durchmesser wenigstens einer Teilwelle (60a, 60b) ist.

9. Getriebe nach einem der Ansprüche 1 bis 8, dadurch gekennzeichnet, daß die Torsionswelle (71) sich in einem Wellenabschnitt befindet, der radial durch andere Getriebebauteile (30, 46) beengt ist.

10. Getriebe nach einem der Ansprüche 1 bis 9, dadurch gekennzeichnet, daß die Torsionswelle (71) eine axial ausgerichtete Bohrung aufweist.

## Claims

1. Hydrostatic-mechanical power dividing transmission with infinitely variable transmission ratio consisting of
a hydrostatic transmission infinitely variable between two end positions, with a positive displacement unit (18) of variable volume and a positive displacement unit (24) of constant volume,
a summing transmission which may contain in particular at least two planetary gear mechanisms (28, 32),
and several gear shift stages (I, II, III, IV) which can be engaged by clutches (68, 70) and by which the output shafts (44, 52) of the summing transmission (28, 32) can be connected to a transmission output shaft (60a, 60b),
characterised in that the transmission output shaft consists of two partial shafts (60a, 60b) which are aligned with each other and axially spaced apart and which each receive at least one shift stage (I, III; II, IV) and are connected to each other in positive-locking relationship by a torsion shaft (71).

2. Transmission according to claim 1, characterised in that for at least two shift stages (I, III; II, IV) there are different individual adjusting ratios.

3. Transmission according to claim 2, characterised in that the summing transmission contains two planetary gear mechanisms (28, 32), and the sun wheels (40, 42), the ring gears (30, 46) and the planet wheels (57, 59) of the planetary gear mechanisms (28, 32) have in each case the same toothing.

4. Transmission according to claim 2 or 3, characterised in that in at least one shift stage (II, IV) used in the main working range of the vehicle there is an adjusting ratio which is lower than the adjusting ratio in another shift stage (I, III).

5. Transmission according to any of claims 1 to 4, characterised in that the two sun wheels (40, 42) are constructed as continuous toothing on a one-piece shaft (36) and mounted in involute toothing so as to be capable of yielding radially and in that the sun wheels (40, 42) are radially supported on all of the at least two planet wheels (57, 59).

6. Transmission according to any of claims 1 to 5, characterised in that at least one partial shaft (60a, 60b) comprises a recess in an end face, which receives one end of the torsion shaft (71), and in that by toothing (114, 116) the torsion shaft (71) is connected in positive-locking relationship to the partial shaft (60a, 60b).

7. Transmission according to claim 6, characterised in that the toothing (114, 116) at the end of the torsion shaft (71) is involute toothing with radially oriented teeth and in that the torsion shaft (71) is slidable within an axial clearance relative to the partial shafts (60a, 60b).

8. Transmission according to any of claims 1 to 7, characterised in that the diameter of the torsion shaft (71) is smaller than the diameter of at least one partial shaft (60a, 60b).

9. Transmission according to any of claims 1 to 8, characterised in that the torsion shaft (71) is located in a shaft section which is radially confined by other transmission components (30, 46).

10. Transmission according to any of claims 1 to 9, characterised in that the torsion shaft (71) comprises an axially oriented bore.

## Revendications

1. Transmission hydrostatique-mécanique à répartition de puissance comportant un rapport de transmission modifiable progressivement et constituée
par une transmission hydrostatique réglable progressivement entre deux positions extrêmes et comportant un mécanisme de refoulement à volume réglable (18) et un mécanisme de refoulement à volume constant (24),
par une transmission additive, qui peut contenir au moins deux engrenages planétaires (28,32), et
par plusieurs étages de commutation de pignons (I,II,III, IV), pouvant être enclenchés par des accouplements de commutation (68,70) et grâce auxquels les arbres de sortie (44,52) de la transmission additive (28,32) peuvent être reliés à un arbre de sortie (60a,60b) de la transmission,
caractérisée en ce que l'arbre de sortie de la transmission est constitué de deux arbres partiels (60a,60b) alignés entre eux et distants axialement l'un de l'autre et qui reçoivent respectivement au moins un étage de commutation (I,III; II,IV) et sont reliés entre eux selon une liaison par formes complémentaires par un arbre de torsion (71).

2. Transmission selon la revendication 1, caractérisée en ce que des rapports de réglage individuels différents sont déterminés pour au moins deux étages de commutation (I,III; II,IV).

3. Transmission selon la revendication 2, caractérisée en ce que la transmission additive contient deux engrenages planétaires (28,32) et que les roues planétaires (40,42), les pignons creux (30,46) et les pignons satellites (57,59) de l'engrenage planétaire (28,32) possèdent respectivement des dentures identiques.

4. Transmission selon la revendication 2 ou 3, caractérisée en ce que dans au moins un étage de commutation (II, IV), utilisé dans la gamme principale de travail du véhicule, est fixé un rapport de réglage, qui est inférieur au rapport de réglage dans un autre étage de commutation (I, III).

5. Transmission selon l'une des revendications 1 à 4, caractérisée en ce que les deux roues planétaires (40, 42) sont réalisées sous la forme d'une denture continue sur un arbre d'un seul tenant (36) et sont montées dans une denture en développante, de manière à pouvoir céder radialement, et que les roues planétaires (40, 42) prennent appui radialement sur l'ensemble des au moins deux pignons satellites (57,59).

6. Transmission selon l'une des revendications 1 à 5, caractérisée en ce qu'au moins un arbre partiel (60a, 60b) possède un évidement frontal, qui loge une extrémité de l'arbre de torsion (71), et que l'arbre de torsion (71) est relié selon une liaison par formes complémentaires, au moyen d'une denture (114,116) à l'arbre partiel (60a,60b).

7. Transmission selon la revendication 6, caractérisée en ce que la denture (114,116) située sur l'extrémité de l'arbre de torsion (71) est une denture en développante comportant des dents dirigées radialement et que l'arbre de torsion (71) est déplaçable dans les limites d'un jeu axial par rapport aux arbres partiels (60a, 60b).

8. Transmission selon l'une des revendications 1 à 7, caractérisée en ce que le diamètre de l'arbre de torsion (71) est inférieur au diamètre d'au moins un arbre partiel (60a,60b).

9. Transmission selon l'une des revendications 1 à 8, caractérisée en ce que l'arbre de torsion (71) est situé dans une partie d'arbre, qui est étranglée radialement par d'autres composants (30,46) de la transmission.

10. Transmission selon l'une des revendications 1 à 9, caractérisée en ce que l'arbre de torsion (71) possède un perçage orienté axialement.
